Europäisches Patentamt

(19) European Patent Office

Office européen des brevets

(11) Publication number: **0 311 224 B1**

(12) **EUROPEAN PATENT SPECIFICATION**

(45) Date of publication of patent specification: **18.12.91**

(51) Int. Cl.⁵: **H01J 49/04**, H01J 49/14, G01N 33/00

(21) Application number: **88202519.0**

(22) Date of filing: **01.03.84**

(60) Publication number of the earlier application in accordance with Art.76 EPC: **0 122 006**

(54) **Electron impact ion source for trace analysis.**

(30) Priority: **04.03.83 US 472257**

(43) Date of publication of application:
**12.04.89 Bulletin 89/15**

(45) Publication of the grant of the patent:
**18.12.91 Bulletin 91/51**

(84) Designated Contracting States:
**CH DE FR GB LI LU NL SE**

(56) References cited:
**US-A- 3 050 622**
**US-A- 3 619 684**
**US-A- 3 648 047**

(73) Proprietor: **UTI Instruments Company**
**325 North Matilda Avenue**
**Sunnyvale Cal. 94086(US)**

(72) Inventor: **Lin, Kuo-chin**
**10331 Parlett Place Star Route 1**
**Cupertino California 95014(US)**
Inventor: **Pickett, Frederick P.**
**13823 Lemon Circle Clearlake Oaks**
**California 95423(US)**

(74) Representative: **Jackson, David Spence et al**
**REDDIE & GROSE 16, Theobalds Road**
**London, WC1X 8PL(GB)**

## Description

The invention relates to a trace analysis apparatus including a housing having analysing means disposed therein, an input line for supplying a gas to be tested, and an electron impact ion source interposed between said input line and said analysing means and having an ion chamber having one end thereof in communication with said input line and the other end thereof in communication with said analysing means, said chamber having between its ends a solid bounding wall with at least one aperture formed therein for introducing electrons into the interior of said chamber, and filament means located outside said chamber and capable of emitting electrons in such manner that the electrons enter said chamber and ionise the gas supplied to said chamber. A gas sample analyser of this kind is described in US-A-3 648 047.

Amongst the known devices for analyzing the components in a gas sample are the mass spectrometer and the mass spectrograph, each of which includes three basic components: an ion source, an analyzer and a detector. For a trace analysis, a gas sample is introduced into an ion chamber where molecules of the sample are ionized by any one of a variety of techniques, such as electron bombardment, photoionization, or surface emission. The ionized molecules emitted from the chamber are introduced into the analyzer which separates the constitutent ions on the basis on their differing masses. Since the ions are charged particles, separation can be achieved through the application of magnetic fields. Other analyzers employ electrostatic and quadrupole systems. Once the ions have been separated by mass, they are detected by a sensing means, such as a multistage electron multiplier.

The best of the known devices hitherto are capable of detecting elements having a concentration as small as a few parts per million in a sample. For most purposes this sensitivity is sufficient. However, in many fields, it is desirable to achieve even greater sensitivity. For example in semiconductor fabrication, in order to maintain high circuit quality and high yields, all gases must be certified at very high purity. More specifically, during epitaxy procedures, impurities, such as hydrocarbons or oxygen, can cause formation of pits in the silicon wafer. Other applications which require reliably tested pure gases include air pollution measurements and gas chromatography systems. Accordingly, there is a need for an apparatus having enhanced sensitivity.

In order to develop an apparatus with enhanced sensitivity, a variety of problems must be overcome. One of the most significant problems relating to the detection of trace elements in a sample concerns the ability of distinguish the measured signals from background noise. As can be appreciated, when the desired signals are only marginally greater than background noise, accurate measurement is inhibited.

US-A-3648047 describes a mass spectrometer in which an input line supplies a gas sample to an ion chamber of an electron impact ion source, from which the ions created pass to an analyser in which the ions are separated according to the ratio of mass to charge by a magnetic field and are collected at different positions by collector cups of electrometers equipped with signal indicators which indicate the proportions of the different ions. The ion chamber has an inlet aperture for the gas sample, an opposing outlet aperture for the ions, and a pair of diametrically opposed apertures defining a transverse path for electrons through the chamber. Adjacent one of the diametrically opposed apertures and outside the ion chamber a thermionic emissive cathode is provided. Adjacent the other of the diametrically opposed apertures and outside the ion chamber an anode is provided. The ion chamber and the analyser are held under vacuum by a vacuum pump communicating with the interior of the analyser. The ion chamber is shown mounted within a housing attached to the analyser housing and closed except where an aperture allows ions to enter the analyser from the ion chamber. The analyser housing is electrically grounded.

US-A-3619684 describes a nonmagnetic electron impact ion source having an ion chamber defined by a coiled grid wound on supporting wires. The ion chamber is surrounded coaxially by a reflector electrode which may be a metal cylinder or another grid. Two filaments for emitting electrons may be mounted diametrically opposite on another at positions between the coiled grid and the reflector when the reflector is also a grid. The gas to be analysed is allowed to pass freely in, around and through the ion chamber and the reflector.

A factor which can adversely affect signal to noise ratio relates to the unwanted detection of electron and photon emissions from the ion source. In many ion sources, ions are created by impacting electrons into the gas molecules, and the ion source has a means for generating electrons and directing them into contact with the sample. For example, in a typical open bombardment source, a filament is located in contact with the sample. Electrons and photons are emitted from the filament when it is energized. Frequently, some of these emitted electrons and photons reach the detector and adversely affect measurement. A peripheral problem associated with this type of open source is that the sample gas tends to contaminate and corrode the filaments. Therefore it would be desirable to provide an improved ion source which reduces electron and photon noise and is less prone to corrosion.

According to the present invention an apparatus of the kind defined hereinbefore at the beginning is characterised in that an electron reflector means is disposed outside the ion chamber and the filament means is located between the reflector means and the said aperture, the electron reflector means being coaxially disposed around said chamber.

In the preferred embodiment of the invention, the apparatus includes a housing which is maintained at a base pressure on the order of $1.33 \times 10^{-6} Nm^{-2}$ ($10^{-8}$ torr). The ion source is mounted within the housing, in communication with the input line for supplying the sample gas. A quadrupole mass analyzer and detector is mounted within the housing, downstream from the ion source, for separating and identifying the ions produced in the sample gas.

The ion source is a closed system which is operated at a pressure in excess of $1.33 \times 10^{-2} Nm^{-2}$ ($10^{-4}$ torr). Preferably, pressures near $0.133 Nm^{-2}$ ($10^{-3}$ torr) are utilized. This operating pressure is on the order of one hundred times greater than that commonly used in the prior art. This increase results in an increase in the base pressure ratio between the ion chamber and detector. The base pressure ratio, on the order of $10^5$, substantially enhances the signal to noise ratio in the detector, thereby improving the sensing of trace elements.

The preferred impact ion source is defined by a generally cylindrical ion chamber having one end thereof in communication with the gas inlet line, while the other end is in communication with the quadrupole mass analyzer and detector. The chamber has at least one aperture formed therein for introducing electrons into the interior thereof. A cylindrical reflector is aligned coaxially with and disposed around the ion chamber for reflecting electrons towards the chamber. A filament means is mounted adjacent to the aperture in the chamber and between the chamber and the reflector.

In use, the filament is energized and electrons emitted therefrom enter the chamber through the aperture. Because of the closed nature of the source, corrosion problems of the filament are substantially reduced. In addition, scattering electrons and photons from the ion source are inhibited from reaching the detector thereby further reducing noise. In the preferred embodiment, a unique means is provided for purging the interior of the ion chamber.

The invention will now be described by way of example with reference to the accompanying drawings in which:-

Figure 1 is a partial cross-sectional view, including block diagrams, of the apparatus for detecting trace elements in accordance with the subject invention.

Figure 2 is an enlarged, cross-sectional view of the electron impact ion source of the apparatus of Figure 1.

Figure 3 is a cross-sectional view of the electron impact ion source, taken along the line III-III of Figure 2.

Figure 4 is an exploded perspective view of the electron impact ion source of Figure 1.

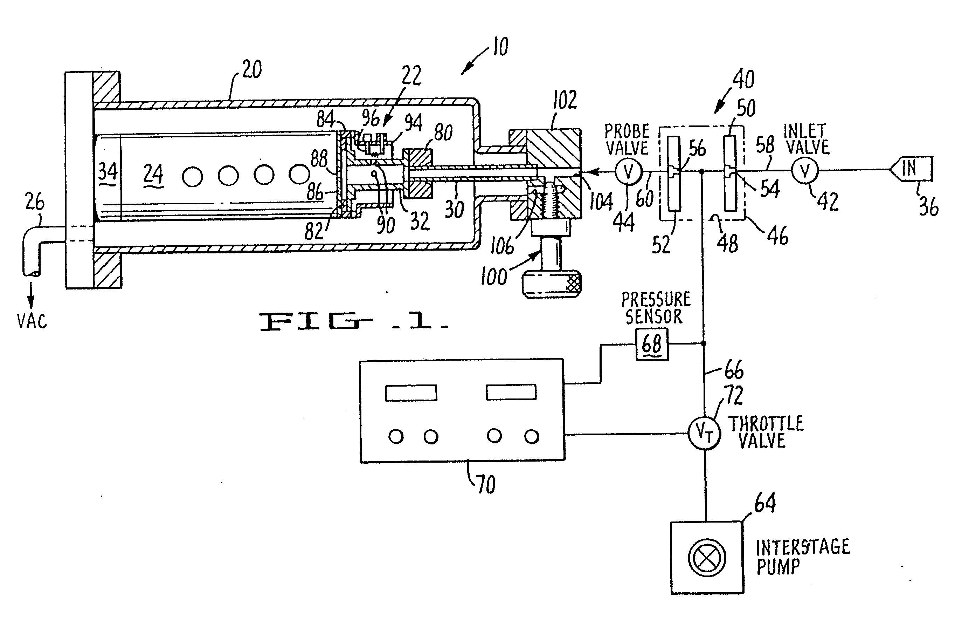

Referring to Figure 1, there is illustrated an overall view of an appartus 10 for detecting trace elements. Briefly, the analyzer includes a sealed, main housing 20 for containing the ion source 22 and the analyzer 24. The interior of the housing 20 is evacuated by a pump (not shown) through a vacuum line 26. It is desirable to maintain the vacuum created therein as complete as possible. In the preferred embodiment, the base pressure within the housing is on the order of $1.33 \times 10^{-6} Nm^{-2}$ ($10^{-8}$ torr).

The housing 20 includes a main inlet tube 30 for receiving the sample gas. The sample gas will pass through the tube 30 and into the ion chamber 32. Molecules of the sample gas are then ionized and pass into the anaylzer 24. While a variety of analyzers are suitable for use with the subject invention, in the preferred embodiment, a quadrupole mass analyzer is used. In a quadrupole mass analyzer, a DC and superimposed RF voltage field is established between a rectangular array of elongated rods in a manner to filter the ionized molecules in accordance with the charge to mass ratio of the molecules. In this manner, a mass spectrum is produced of the ionized material at the output of the analyzer. This output is supplied to a detector 34. In the preferred embodiment, detector 34 is defined by a multistage electron multiplier and Faraday cup combination.

The sample gas to be tested is supplied to the apparatus 10 from a source 36. Interposed between the housing 20 and the source 36 is a means 40 for accurately regulating the pressure of the sample gas introduced into the ion chamber 32. A pair of valves 42 and 44 may be provided on either side of the pressure regulation means 40 for isolation purposes.

The gas pressure of the source 36 will typically vary over a range of $0.507 \times 10^5 Nm^{-2}$ (.5 atmospheres) to $2.030 \times 10^5 Nm^{-2}$ (2.0 atmospheres). The regulation means 40 compensates for this wide range of input pressures, and accurately measures and delivers the desired pressure of the sample gas to the ion chamber 32.

The pressure regulation means 40 includes a housing module 46 having an open interior 48, and a pair of opposed walls 50 and 52 having apertures 54 and 56, located therein. Aperture 54 is in communication with input line 58 from the gas supply source 36. Aperture 56 is in communication with output line 60 for channeling the gas to the ion chamber 32.

A pump 64 is provided for evacuating gas from the module via line 66. A pressure sensor 68 monitors the pressure within module 46. A control means 70 is operatively connected to the sensor 68, and to the pump 64 via a throttle valve 72. The control 70 functions to actuate throttle valve 72 enabling pump 64 to regulate the pressure within module 46 in response to sensor 68. By this arrangement, the pressure of the gas sample supplied to the ion chamber 32 can be accurately regulated.

Preferably, the pressure in ion chamber 32 is on the order of $0.133Nm^{-2}$ ($10^{-3}$ torr). The ion source 22 is relatively corrosion free and also functions to significantly reduce noise often created in prior art devices by stray electrons and photons.

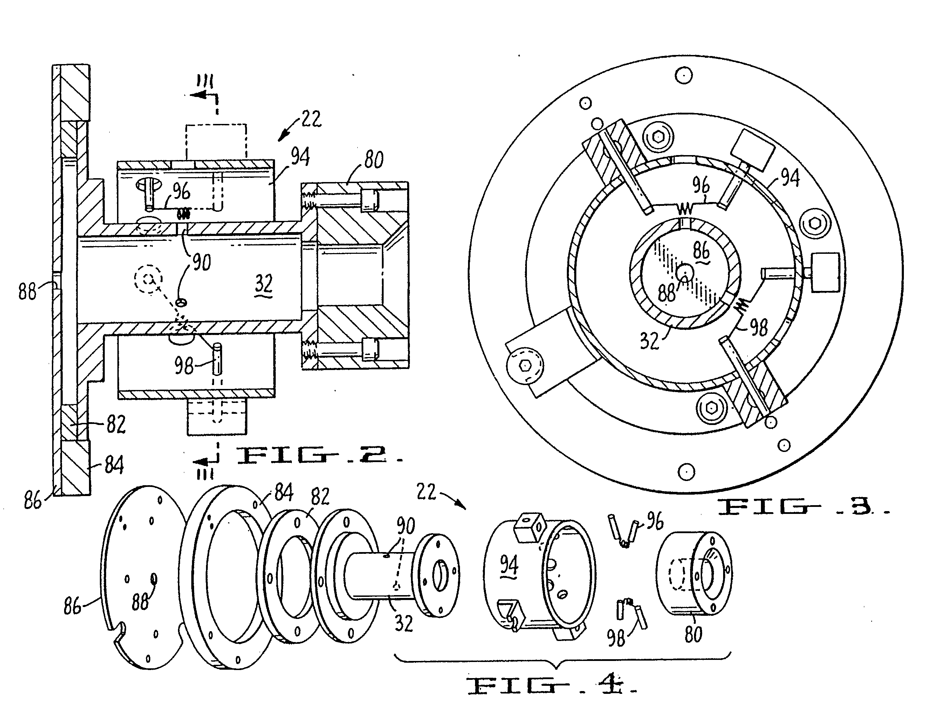

The advantages of ion source 22 can best be appreciated by referring to Figures 2 to 4. Ion source 22 consists of a generally cylindrical ion chamber 32 formed from stainless steel or other non-corroding material. The upstream end of ion chamber 32 is mounted to a ceramic dielectric cylinder 80. As illustrated in Figure 1, cylinder 80 receives input line 30. The downstream end of chamber 32 is mounted to the analyzer 24. Interposed between the analyzer and the chamber 32 are a pair of ceramic insulating rings 82 and 84. In addition, a metallic focus plate 86 is mounted against the upstream end of analyzer 24 and includes a central aperture 88 for emitting ions into the analyzer.

The ion chamber 32 includes a pair of apertures 90 for emitting electrons into the interior of the chamber. A generally cylindrical electron reflector 94 is mounted coaxially about ion chamber 32. As illustrated in Figures 2 and 3, a pair of filaments 96 and 98 are mounted adjacent the apertures in the ion chamber 32. In use, a current is passed through filaments 96 and 98 such that they emit electrons. Because of their location, a large portion of the electrons emitted from the filaments will enter the ion chamber through apertures 90. To further ensure that the electrons are directed towards the chamber, reflector 94 is preferably maintained at a negative bias voltage, on the order of 50 volts.

In operation, a sample gas is introduced into the ion chamber through conduit 30. The sample gas molecules are then subjected to electron bombardment from filaments 96 and 98. This bombardment ionizes a percentage of the molecules in the sample gas. Molecules of the sample gas then move through aperture 88 in focus plate 86 and into the quadrupole analyzer 24.

As discussed above, the design of the subject ion source 22 is intended to reduce noise and be corrosion resistant. As can be appreciated, due to the relatively restricted apertures 90 in ion chamber 32, few gas molecules will escape therefrom. Accordingly, corrosion and contamination of the filaments and reflector is substantially reduced. In addition, due to the relatively small aperture 88 in focus plate 86, only a limited amount of free electrons and photons emitted from the filament will enter the analyzer 24. In this manner, spurious noise is reduced.

Another feature of the ion source includes a means for cleansing the system of any residual matter. Frequently, during the operation of the apparatus, polar gas molecules will tend to cling to the walls of the ion chamber 32. This contamination can affect the accuracy of the trace element analysis.

To purge the system on a periodic basis to remove the residual contamination molecules, a valve means 100, as illustrated in Figure 1, is provided having an outer mounting block 102 connected to the upstream end of housing 20. Block 102 includes a main channel 104 for receiving the sample gas, and an L-shaped side channel 106 which is in communication with both the main channel 104 and the interior of housing 20. When valve means 100 is in the closed position, as illustrated in Figure 1, the sample gas will pass directly from module 46 along channel 104 and into the ion chamber 32. However, when the system is to be cleansed, the probe valve 44 is initially closed and valve 100 is opened. In this orientation, the main channel 104 is exposed to the high vacuum contained in housing 20. The high vacuum condition functions to evacuate all residual molecules clinging to the interior surface of the ion chamber 32. Preferably, the evacuation purge system is supplemented by a heating source for baking the residual contaminating molecules. The heating source (not shown ) can be mounted about the reflector 94.

Reference should also be made to European patent no. 0122006 from which the present application is divided, and to the European patent application, publication no. 0310210, which is also divided out of EP-0122006.

## Claims

1. A trace analysis apparatus including a housing (20) having analysing means (24) disposed therein, an input line (30) for supplying a gas to be tested, and an electron impact ion source (22) interposed between said input line (30) and said analysing means (24) and having an ion chamber (32) having one end thereof in communication with said input line (30) and the other end thereof in communication with said analysing means (24), said chamber (32) having between its ends a solid bounding wall with at least one aperture (90) formed therein for introducing electrons into the interior of said chamber (32), and filament means (96) located outside said chamber (32) and capable of emitting electrons in such a manner that the electrons enter said chamber (32) and ionise the gas supplied to said chamber (32), characterised in that an electron reflector means (94) is disposed outside the ion chamber (32) and the filament means (96) is located between the reflector means (94) and the said aperture (90), the electron reflector means (94) being coaxially disposed around said chamber (32).

2.  An apparatus according to claim 1, characterised in that said chamber (32) includes two apertures (90) in a cylindrical wall thereof and said filament means (96, 98) is defined by a pair of filament members (96, 98) respectively aligned with said two apertures (90).

3.  An apparatus according to claim 2, characterised in that said filament means (96, 98) is mounted to said reflector means (94).

4.  An apparatus according to claim 1, characterised by including a means (100, 106) for evacuating said chamber (32) to facilitate purging of all residual materials held therein.

5.  An apparatus according to claim 4, characterised in that said means for evacuating said chamber (32) includes a valve means (100) interposed between and in communication with both said input line (30) and said housing (20) such that when said valve means (100) is opened, said chamber (32) is exposed to near vacuum conditions within the housing (20) for purging any residual matter remaining in said ion chamber (32).

6.  An apparatus according to any preceding claim, characterised in that the gas pressure in said chamber (32) in operation exceeds 1.33 x $10^{-2}$ Nm$^{-2}$ ($10^{-4}$ torr).

7.  An apparatus according to any preceding claim, characterised by a metallic focus plate (86) interposed between said chamber (32) and said analyzing means (24), said focus plate (86) being opposed to said input line (30) and being electrically isolated from said chamber (32) and including an aperture (88) for emitting ions into the analyzing means (24).

## Revendications

1.  Appareil d'analyse de traces comprenant une enceinte (20) dans laquelle sont disposés des moyens d'analyse (24), une conduite d'entrée (30) destinée à amener un gaz à tester, et une source ionique (22) à impact d'électrons interposée entre ladite conduite d'entrée (30) et lesdits moyens d'analyse (24) et comportant une chambre à ions (32) dont une extrémité est en communication avec ladite conduite d'entrée (30) et dont l'autre extrémité est en communication avec lesdits moyens d'analyse (24), ladite chambre (32) ayant entre ses extrémités une paroi pleine de confinement dans laquelle est formée au moins une ouverture (90) pour l'introduction d'électrons à l'intérieur de ladite chambre (32), et des moyens à filaments (96) placés à l'extérieur de ladite chambre (32) et capables d'émettre des électrons d'une manière telle que les électrons entrent dans ladite chambre (32) et ionisent le gaz amené à ladite chambre (32), caractérisé en ce qu'un moyen (94) à réflecteur d'électrons est disposé à l'extérieur de la chambre à ions (32) et les moyens à filaments (96) sont placés entre le moyen à réflecteur (94) et ladite ouverture (90), le moyen (94) à réflecteur d'électrons étant disposé coaxialement autour de ladite chambre (32).

2.  Appareil selon la revendication 1, caractérisé en ce qu'une paroi cylindrique de ladite chambre (32) présente deux ouvertures (90) et lesdits moyens (96, 98) à filaments sont définis par deux éléments à filaments (96, 98) alignés respectivement avec lesdites deux ouvertures (90).

3.  Appareil selon la revendication 2, caractérisé en ce que lesdits moyens à filaments (96, 98) sont montés sur ledit moyen à réflecteur (94).

4.  Appareil selon la revendication 1, caractérisé en ce qu'il comporte des moyens (100, 106) destinés à évacuer ladite chambre (32) pour faciliter la purge de toutes les matières résiduelles qui y restent.

5.  Appareil selon la revendication 4, caractérisé en ce que lesdits moyens d'évacuation de ladite chambre (32) comprennent un moyen à valve (100) interposé entre, et en communication avec, à la fois ladite conduite d'entrée (30) et ladite enceinte (20) de manière que, lorsque ledit moyen à valve (100) est ouvert, ladite chambre (32) soit exposée à des conditions proches du vide à l'intérieur de l'enceinte (20) pour purger toute matière résiduelle restant dans ladite chambre à ions (32).

6. Appareil selon l'une quelconque des revendications précédentes, caractérisé en ce que la pression gazeuse dans ladite chambre (32) en cours de fonctionnement dépasse 1,33 x $10^{-2}$ $Nm^{-2}$ ($10^{-4}$ torr).

7. Appareil selon l'une quelconque des revendications précédentes, caractérisé par une plaque métallique (86) de concentration interposée entre ladite chambre (32) et lesdits moyens d'analyse (24), ladite plaque (86) de concentration étant opposée à ladite conduite d'entrée (30), étant isolée électriquement de ladite chambre (32) et présentant une ouverture (88) pour émettre des ions dans les moyens d'analyse (24).

**Patentansprüche**

1. Spurenanalyseapparatur, umfassend ein Gehäuse (20) mit einer darin angeordneten Analyseeinrichtung (24), einer Eingangsleitung (30) zur Zufuhr eines zu prüfenden Gases, und einer Elektronenstoss-Ionenquelle (22), die sich zwischen der Eingangsleitung (30) und der Analyseeinrichtung (24) befindet und eine Ionenkammer (32) besitzt, die mit einem Ende in Verbindung mit der Eingangsleitung (30) und mit dem anderen Ende in Verbindung mit der Analyseeinrichtung (24) steht, wobei die Kammer (32) zwischen ihren Enden eine feste Begrenzungswand mit mindestens einer darin ausgebildeten Öffnung (90) zum Einführen von Elektronen in das Innere der Kammer (32) aufweist, wobei sich außerhalb der Kammer (32) eine Heizfadenanordnung (96) befindet, die in der Lage ist, Elektronen derart zu emittieren, daß die Elektronen in die Kammer (32) eintreten und das der Kammer (32) zugeführte Gas zu ionisieren, dadurch gekennzeichnet, daß außerhalb der Ionenkammer (32) eine Elektronen-Reflektoreinrichtung (94) angeordnet ist und die Heizfadenanordnung (96) sich zwischen der Reflektoreinrichtung (94) und der Öffnung (90) befindet, wobei die Elektronen-Reflektoreinrichtung (94) koaxial um die Kammer (32) herum angeordnet ist.

2. Apparatur nach Anspruch 1, dadurch gekennzeichnet, daß

die Kammer (32) zwei Öffnungen (90) in einer zylindrischen Wand der Kammer enthält und die Heizfadenanordnungen (96, 98) definiert werden durch ein Paar Heizfadenelemente (96, 98), die mit den beiden Öffnungen (90) einzeln ausgerichtet sind.

3. Apparatur nach Anspruch 2, dadurch gekennzeichnet, daß die Heizfadenanordnungen (96, 98) an der Reflektoreinrichtung (94) montiert sind.

4. Apparatur nach Anspruch 1, gekennzeichnet durch eine Einrichtung (100, 106) zum Evakuieren der Kammer (32), um die Beseitigung sämtlicher in der Kammer gehaltenen Reststoffe zu erleichtern.

5. Apparatur nach Anspruch 4, dadurch gekennzeichnet, daß die Einrichtung zum Evakuieren der Kammer (32) eine Ventileinrichtung (100) enthält, die zwischen und in Verbindung mit sowohl der Eingangsleitung (30) als auch dem Gehäuse (20) derart angeordnet ist, daß, wenn die Ventileinrichtung (100) geöffnet ist, die Kammer (32) annähernd Vakuumbedingungen innerhalb des Gehäuses (20) ausgesetzt ist, um jegliche in der Ionenkammer (32) verbliebenen Reststoffe auszuleiten.

6. Apparatur nach einem der vorhergehenden Ansprüche, dadurch gekennzeichnet, daß der Gasdruck in der Kammer (32) im Betrieb 1,33 x $10^{-2}$ $Nm^{-2}$ ($10^{-4}$ torr) übersteigt.

7. Apparatur nach einem der vorhergehenden Ansprüche, gekennzeichnet durch eine metallische Fokusplatte (86), die zwischen der Kammer (32) und der Analyseeinrichtung (24) liegt, wobei die Fokusplatte (86) der Eingangsleitung (30) gegenüberliegt und von der Kammer (32) elektrisch isoliert ist und eine Öffnung (88) zum Emittieren von Ionen in die Analyseeinrichtung (24) enthält.

FIG .1.

EP 0 311 224 B1

FIG. 3.

FIG. 4.

FIG. 2.